# EUROPEAN PATENT SPECIFICATION

(11) **EP 0 565 087 B1**
(45) Date of publication and mention of the grant of the patent: **18.06.1997**
(21) Application number: 93105776.4
(22) Date of filing: 07.04.1993
(51) Int. Cl.: B01J 8/24, B01J 8/38, B01F 13/02, C08F 2/34, C08F 10/00

(54) **Fluidized bed reactor**
Wirbelbettreaktor
Réacteur à lit fluidifié

(30) Priority: 10.04.1992 FI 921632
(43) Date of publication of application: 13.10.1993
(73) Proprietor: BOREALIS POLYMERS OY, SF-06101 Porvoo (FI)
(72) Inventor: Hämäläinen, Matti, SF-07230 Monninkylä (FI)
(74) Representative: Tiedtke, Harro, Dipl.-Ing.

(56) References cited:
- DE-A- 1 632 404
- DE-A- 3 523 990
- US-A- 4 976 688
- CHEMICAL ABSTRACTS, vol. 98, no. 16, April 1983, Columbus, Ohio, US; abstract no. 128208q, 'Apparatus for treating materials in a fluidised bed' page 110 ;column 1 ;

## Description

The present invention relates to a fluidized bed reactor for polymerizing or copolymerizing olefins. More particularly, the invention relates to formulation of the bottom part of such fluidized bed reactor.

Fluidized bed reactors are generally used in continuous-action gas-phase polymerization for producing olefin polymers. In a fluidized bed reactor the polymerization is accomplished in a fluidized bed formed by polymer particles being polymerized, said bed being maintained in fluidizing state with the aid of circulation gas flow directed upwards from the bottom part. The circulation gas flow includes gaseous hydrocarbon diluting agents and/or inert gases and/or monomers to be polymerized, added into the circulating gas line. The circulating gas flow is removed from the gas volume of the top part of the reactor, it is conducted into thermal exchangers for conveying off the heat produced during the polymerization and is returned to the lower part of the reactor with the aid of a compressor.

Uniform distribution of the circulating gas in the fluidized bed conducted to the lower section of the reactor is indispensable in maintaining a uniform fluidization state. For distributing the circulating gas a flow division means in the form of a perforated intermediate floor is generally used, being located in the adjacency of the lower section of the reactor. Thus, an inlet or mixing chamber for the circulating gas is formed in the bottom part of the reactor, being separated by said flow division plate from the fluidized bed, i.e. from the actual polymerization section.

The greater the reaction size, the more difficult it is to make the circulating gas to distribute uniformly in the fluidized bed on the entire cross-section area of the reactor. As a result of the uneven distribution, denser and less well fluidizing areas start to produce, particularly in the vicinity of the reactor walls. The problem worsens when liquid fractions also enter along with the circulating gas because particularly making the liquid phase to be distributed uniformly within the fluidized bed is difficult. Therefore, local heating and agglomeration of polymer particles into larger lumps occur in the fluidized bed, as well as catching of agglomerates onto the reactor surfaces.

For improving the distribution of the gas flow, propositions have been put forth to use gas division plates in which the size, shape and positioning of apertures have been modified. However, production of said gas division plates of special structure is expensive and the gas permeability may be inadequate, thus causing unneeded pressure drop in the gas circulation flowing through the reactor.

A second common problem related to the increased fluidized bed reactor size is agglomerization of polymer particles and their catching on the wall surfaces of the bottom section of the reactor. Some small polymer particles containing an active catalyst tend to pass from the reactor together with the circulating gas, said particles returning to the reactor bottom part with the circulating gas. If circulating gas is conducted into the reactor in a conventional manner through a straight tubular connector placed in the bottom and if the flow conditions or the shape of the bottom section of the reactor are not optimal, local flows start to produce in the circulating gas inlet chamber, in the adjacency of which polymer particles become gathered. In order to eliminate said drawback, some suggestions have been made for use of various flow spreading means in conjunction with the circulation gas feed tube. Thus, for instance in the US. patent No. 4,877,587, on one end of the circulation gas feed tube in the reactor bottom, dispersion means have been attached to separate the flow from the tube into two parts so that one part of the flow turns aside and the rest of the flow goes upwards. With designs such as these, it has not been entirely possible to avoid that flows circulating in one place occur in the bottom part of the reactor, and this results in agglomeration and catching of polymer particles onto the walls. Similarly, cleansing said dispersion means is cumbersome and if one wants, for one reason or another, to employ a different design, dismounting and replacing the means is difficult and requires a shut-down and opening of the reactor.

A typical bottom shape of a fluidized bed reactor forms a more or less spherical surface, like for instance the one disclosed in the US patent No. 4,877,587. An advantage of said bottom shape in comparison with a planar bottom is that areas with any sharp angles will not be produced in the vicinity of the lower part of the wall where, consequently, the gas flow is poor and therefore causes agglomeration of polymer particles. If circulating gas is conducted in through an inlet aperture or tube located in the centre point of the bottom, a design like this would not work in reactors of production scale in which the cross-section of the bottom part might well be several metres.

The object of the present invention is a fluidized bed reactor, the bottom part thereof being so designed that the above problems can be eliminated. Thus, the present invention concerns a fluidized bed reactor in which olefins are polymerized or copolymerized in a bed fluidized with the aid of circulating gas and formed of the particles to be polymerized, and said reactor being provided with means for feeding the circulating gas from a gas space above the fluidized bed into the lower section of the reactor, which is separated from the upper section of the reactor by means of a flow division plate. As taught by the invention, the reactor is characterized in that the bottom section of the reactor has a cake mould shape which comprises an annular space, the inner wall thereof being defined by an upwards tapering rotating conical surface and the outer wall by a downwards tapering rotating conical surface, and the bottom surface of the bottom part of the reactor being defined by an annular surface having a rounded cross-section connecting said rotating conical surfaces.

The use of the bottom part resembling a "cake mould" in fluidized bed polymerization reactors is a novel feature. Externally, a similar bottom design has been introduced earlier for use in e.g. solution polymerizing reactors. Thus, the US. patent No. 3,737,288 discloses a reactor provided with an internal flow tube in which a polymerizing solution is with the aid of propeller parts circulated along an inner tube upwards into the upper part of the reactor and the solution flows back into the lower part of the reactor along the inner wall of the reactor. The sole purpose of the bottom shape disclosed in that US patent is to provide the usual "roundings" for turning the liquid phase flow from a smooth downflow into an upflow. Instead of this system, the object of the present invention is to have a gas flow distributed uniformly on the entire cross-section area of the reactor upwards from the bottom part of the reactor.

The "cake mould" shape is a generally familiar concept related to cake moulds used in the kitchens. A shape like that suggests that the centre region of the bottom is lifted upwards. The bottom shape used generally in the reactor of the invention may be defined as an annular space, the inner wall thereof being defined by an upwards tapering conical rotating surface and the outer wall by a downwards tapering conical rotating surface.

Thus, the lowest point of the bottom part of the reactor formed in the manner taught by the invention should consist of a sharp corner produced in the junction of said two conical rotating surfaces. This kind of sharp-angled design is not, however, very desirable. The lowest point of the bottom part is for this reason formulated to be rounded so that no sharp angles or corners are produced.

As taught by the invention, the bottom part of the reactor thus consists of two nested cones, the inner one thereof tapering upwards and the outer one downwards, and the lower parts of said conical surfaces being connected with a ring the cross-sectional shape of which corresponds to the shape of a paraboloid, advantageously to the shape of a semi-circle. This is the manner how the cake mould structure is formed according to the invention.

The conical shapes of the edge section of the bottom part and of the inner part thereof can be similar or different, and said cone angles can be selected e.g. in the range 1 to 30 degrees. Similarly, the height of the bottom part, i.e. the distance from the lowest point of the bottom to the flow division plate may vary considerably depending on the dimensions of the reactor. Consequently, said distance may be in the range 0.3 x D to 0.5 x D, where D is the diameter of the reactor.

The circulating gas is conducted into the bottom part of the reactor through apertures formed in the lowest part of the bottom structure of the reactor. There may be one or more of such apertures, but it is in general desirable to use three or more symmetrically positioned flow apertures.

The cake mould bottom structure of the invention provides additional advantages in reactors provided with a mixer. The mixing shaft taken through the bottom usually requires a journal bearing inside the reactor which might cause disturbances in the functioning of the fluidized bed. In the bottom part of the reactor according to the invention, the journal bearing can be affixed to the upper end of the uplifted centre part of the bottom, so that no supporting bearings are needed within the reactor.

Another advantage of the bottom structure taught by the invention relates especially to reactors having a large diameter in which it is difficult to stiffen the flow division plate situated in the region of the bottom part of the reactor in the reactors according to the conventional technique. In accordance with the invention, the flow division plate can be advantageously supported on the upper end of the uplifted centre part of the bottom part, whereby the flow division plate can be as thin as possible. This is advantageous to the operation of the reactor.

The invention is described further by referring to the accompanying figures, in which:-
Figure 1 presents in elevational view the bottom part of the reactor according to the invention, and
Figure 2 presents the bottom part of the reactor in top view.

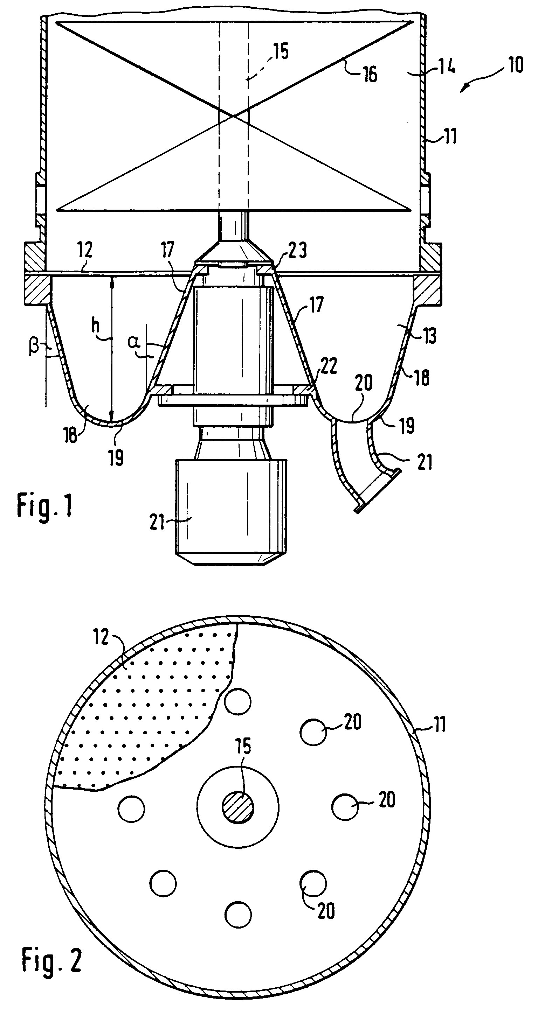

In Figures 1 and 2 the fluidized bed reactor is generally indicated by reference numeral 10. The reactor 10 is provided with a cylindrical outer wall 11. A perforated flow division plate 12 divides the reactor into a fluidized gas inlet part 13 and a fluidized bed part 14. In Fig. 2 the flow division plate 12 is shown partly open sectioned. In the present embodiment, the reactor 10 has also been provided with a mixing element 16 rotated by a shaft 15.

The bottom part of the reactor 10 consists of two nested conical surfaces, an inner conical surface 17 thereof tapering upwards and an outer conical surface 18 tapering downwards. The conical surfaces 17 and 18 are connected by an annular section 19 being in shape almost semicircular, said section constituting the lowermost part of the bottom. The cone shape of the inner conical surface 17, i.e. the cone angle deviating from the vertical line, is indicated by letter α. The cone shape of the outer conical surface 18 is respectively indicated by letter β. The height of the bottom part, i.e. the distance from the lowest point of the bottom part to the flow division plate 12 is indicated by letter h. The flow division plate 12 is advantageously attached to the point indicated by reference numeral 23 for supporting the plate 12.

Inlet apertures 20 for the circulating gas have been produced in the lowest point of the bottom part 13. The circulating gas is conducted through the apertures 20 from a circulating gas tube or tubes 21 into the reactor bottom part 13 and then on through the flow division plate 12 into the fluidized bed section 14. In order to provide a smooth flow, there may be a plurality of apertures 20 and they have been positioned preferably in symmetry.

An electromotor 21 with the bearings, rotating the mixing shaft 15, is preferably positioned inside the wall section defined by the inner conical surface 17 at points indicated by reference numerals 22 and 23. A firm fixing is thus achieved, and the mixing shaft 15 needs no upper supporting bearings in the fluidized bed section 14.

The present invention relates to a fluidized bed reactor (10) in which olefins are polymerized or copolymerized in a bed formed by particles being polymerized and fluidized with the aid of a circulating gas, and in which the reactor (10) is provided with means for feeding circulating gas from a gas space above the fluidized bed (14) into the lower part of the reactor (10). The bottom part (13) of the reactor (10) comprises an annular space, the inner wall (17) whereof being defined by an upwards tapering rotating conical surface and the outer wall (18) by a downwards tapering rotating conical surface.

## Claims

1. A fluidized bed reactor (10) in which olefins are polymerized or copolymerized in a bed produced by particles to be polymerized, and fluidized with the aid of a circulating gas, and which reactor (10) is provided with means for supplying circulating gas from a gas space above the fluidized bed (14) into the lower part of the reactor (10), which is separated from the upper part of the reactor (10) by means of a flow division plate (12),
**characterized in that**
the bottom part (13) of the reactor (10) has a cake mould shape which comprises an annular space whose inner wall (17) consists of an upwards tapering conical rotating surface and whose outer wall (18) consists of a downwards tapering conical rotating surface and the bottom surface of the bottom part (13) of the reactor (10) consists of an annular surface (19) having a rounded cross-section connecting said rotating conical surfaces (17, 18).

2. A fluidized bed reactor according to claim 1,
**characterized in that**
the annular surface (19) is a paraboloid in cross-section.

3. A fluidized bed reactor according to claim 1,
**characterized in that**
the annular surface (19) is a semi-circle in cross-section.

4. A fluidized bed reactor according to claim 1, 2 or 3, **characterized by**
one or more feed apertures (20) which open to said bottom surface (19) and through which the circulating gas is conductable into the bottom part (13).

5. Fluidized bed reactor according to any one of the preceding claims,
**characterized in that**
the uplifted center part of the bottom part (13) of the reactor (10) serves as a support point for the bearing of a mixing shaft (15) extending into said fluidized bed (14) and/or for the flow division plate (12).

## Patentansprüche

1. Wirbelbettreaktor (10), in welchem Olefine in einem Bett, das durch zu polymerisierende Partikel erzeugt ist,
polymerisiert oder kopolymerisiert werden und mit der Hilfe eines Umlaufgases fluidisiert werden, wobei der Reaktor (10) mit einer Einrichtung für das Zuführen von Umlaufgas von einem oberhalb des Wirbelbettes (14) befindlichen Gasraum in den unteren Teil des Reaktors (10) versehen ist, welcher von dem oberen Teil des Reaktors (10) mittels einer Stromteilungsplatte (12) separiert ist, dadurch gekennzeichnet, daß der Bodenteil (13) des Reaktors (10) eine Kuchenform hat, die einen Ringraum aufweist, dessen Innenwand (17) aus einer nach oben konisch zulaufenden Drehoberfläche besteht und dessen Außenwand (18) aus einer nach unten konisch zulaufenden Drehoberfläche besteht, wobei die Bodenoberfläche des Bodenteils (13) des Reaktors (10) aus einer Ringoberfläche (19) besteht, die einen gerundeten Querschnitt hat, der die konischen Drehoberflächen (17, 18) verbindet.

2. Wirbelbettreaktor gemäß Anspruch 1, dadurch gekennzeichnet, daß die Ringoberfläche (19) im Querschnitt ein Paraboloid ist.

3. Wirbelbettreaktor gemäß Anspruch 1, dadurch gekennzeichnet, daß die Ringoberfläche (19) im Querschnitt ein Halbkreis ist.

4. Wirbelbettreaktor gemäß Anspruch 1, 2 oder 3, gekennzeichnet durch eine oder mehrere Zufuhröffnungen (20), die in die Bodenoberfläche (19) münden und durch welche das Umlaufgas in den Bodenteil (13) leitbar ist.

5. Wirbelbettreaktor gemäß einem der vorangegangenen Ansprüche, dadurch gekennzeichnet, daß der herausgehobene Mittelteil des Bodenteils (13) des Reaktors (10) für die Lagerung einer Mischwelle (15), die sich in das Wirbelbett (14) erstreckt und/oder für die Stromteilungsplatte (12) als ein Stützpunkt dient.

## Revendications

1. Un réacteur à lit fluidisé (10) dans lequel des oléfines sont polymérisées ou co-polymérisées dans un lit produit par les particules devant être polymérisées, et fluidisé à l'aide d'un gaz circulant et dans lequel réacteur (10), il est prévu des moyens pour alimenter le gaz circulant à partir d'un espace de gaz au-dessus du lit fluidisé (14) dans la partie inférieure du réacteur (10) qui est séparée de la partie supérieure du réacteur (10) au moyen d'une plaque de division d'écoulement (12),
caractérisé en ce que
la partie de fond (13) du réacteur (10) présente une forme de moule à gâteau qui comprend un espace annulaire dont la paroi intérieure (17) se compose d'une surface tournante conique effilée vers le haut et dont la paroi extérieure (18) se compose d'une surface tournante conique effilée vers le bas et la surface de fond de la partie de fond (13) du réacteur (10) se compose d'une surface annulaire (19) ayant une section transversale arrondie reliant lesdites surfaces coniques tournantes (17, 18).

2. Un réacteur à lit fluidisé selon la revendication 1, caractérisé en ce que la surface annulaire (19) est un paraboloïde en section transversale.

3. Un réacteur à lit fluidisé selon la revendication 1, caractérisé en ce que la surface annulaire (19) est un demi-cercle en section transversale.

4. Un réacteur à lit fluidisé selon la revendication 1, 2 ou 3, caractérisé par une ou plusieurs ouvertures d'alimentation (20) qui débouchent à ladite surface de fond (19) et au travers desquelles le gaz circulant est amené dans la partie de fond (13).

5. Un réacteur à lit fluidisé selon l'une quelconque des revendications précédentes, caractérisé en ce que la partie centrale surélevée de la partie de fond (13) du réacteur (10) sert de point de support pour le support d'un arbre de malaxage (15) s'étendant dans ledit lit fluidisé (14) et/ou pour la plaque de division d'écoulement (12).
